# EUROPÄISCHE PATENTSCHRIFT

(11) **EP 3 695 183 B1**
(45) Veröffentlichungstag und Bekanntmachung des Hinweises auf die Patenterteilung: **14.07.2021**
(21) Anmeldenummer: 18810897.1
(22) Anmeldetag: 14.11.2018
(51) Int. Cl.: F28D 20/00

(54) **ANORDNUNG ZUR SPEICHERUNG VON THERMISCHER ENERGIE**
ASSEMBLY FOR STORING THERMAL ENERGY
DISPOSITIF DE STOCKAGE D'ÉNERGIE THERMIQUE

(30) Priorität: 16.11.2017 EP 17202011
(43) Veröffentlichungstag der Anmeldung: 19.08.2020
(73) Patentinhaber: Siemens Gamesa Renewable Energy GmbH & Co. KG, 20097 Hamburg (DE)
(72) Erfinder: INHETVEEN, Patrick, 29345 Unterlüss (DE)
(74) Vertreter: Aspacher, Karl-Georg
(86) Internationale Anmeldenummer: PCT/EP2018/081142
(87) Internationale Veröffentlichungsnummer: WO 2019/096809

(56) Entgegenhaltungen:
- WO-A1-2017/055475
- DE-A1- 2 721 173
- DE-A1- 3 124 021

## Beschreibung

Die Erfindung betrifft eine Anordnung zur Speicherung von thermischer Energie.

Bei einem hohen Anteil an erneuerbarer Energie (Windenergie, Sonnenenergie, Gezeitenenergie, etc.) in einem Energieversorgungsnetz wird es zunehmend wichtiger, die erneuerbare Energie zwischenzuspeichern, um die Verfügbarkeit der erneuerbaren Energie mit den Erfordernissen der Netzstabilität und dem Verbraucherverhalten sinnvoll zu kombinieren.

Es ist bekannt, gewonnene elektrische Energie in thermische Energie (Hitze) umzuwandeln und in einem Wärmespeicher zeitlich begrenzt zwischenzuspeichern.

Es sind Wärmespeicher bekannt, bei denen feste Materialien als Speichermaterial verwendet werden - beispielsweise Steine oder Keramik bzw. Geröll. Ein erhitztes Fluid - zum Beispiel elektrisch aufgeheizte Luft - wird als Hitze-Übertragungsmedium verwendet und in den Wärmespeicher eingeleitet. Das feste Speichermaterial des Wärmespeichers wird aufgeheizt und zur zeitlichen Energiespeicherung verwendet.

Entsprechend wird bei einer Energieentnahme aus dem Wärmespeicher ein (kühles) Fluid wie Luft in den Wärmespeicher geblasen, darin aufgeheizt und nachfolgend einem Wandlersystem zugeführt. Das Wandlersystem wandelt die aus dem Wärmespeicher über das Fluid (Luft) entnommene thermische Energie in elektrische Energie um.

Beispielsweise wird mit Hilfe der erhitzen Luft die entnommene thermische Energie über einen Wasserdampf-Kreislauf und unter Verwendung einer Dampfturbine in elektrische Energie umgewandelt.

Ein Wettbewerb-fähiges Energiespeichersystem hoher Effizienz muss hohe Dampfparameter (Temperatur T, Leistung P) gewährleisten. Dies kann nur erreicht werden, wenn thermische Energie unter Verwendung hoher Temperaturen gespeichert wird. Das zur Speicherung verwendete Material ist somit hohen und ggf. schnell erfolgenden Temperaturunterschieden ausgesetzt und muss damit einhergehend entsprechenden Belastungen (z.B. thermischen bzw. mechanischen Belastungen) widerstehen.

Es ist bekannt, dass zur Speicherung verwendete Material mit einer Fluid-undurchlässigen, flexiblen Schicht gegenüber der Umwelt des Wärmespeichers zu isolieren bzw. abzudichten. Beispielsweise kommt zu diesem Zweck eine luftdichte Folie zum Einsatz, die derart angeordnet ist, dass Druck bzw. Temperatur innerhalb des Wärmespeichers erhalten bleiben.

Diese Fluid-undurchlässige, flexible Schicht wird durch den engen Kontakt mit dem zur Speicherung verwendeten Material den gleichen hohen und ggf. schnell erfolgenden Temperaturunterschieden ausgesetzt und muss damit einhergehend den entsprechenden Belastungen ebenfalls widerstehen können.

Zugleich muss diese Fluid-undurchlässige, flexible Schicht gewährleisten, dass das im Arbeitsmodus verwendete gesamte Volumen des Wärmespeichers erhalten bleibt, um ungewollte Effekte im Wärmespeicher (z.B. eine ungleichmäßige Temperaturverteilung im Speichervolumen oder die Bildung von unerwünschten Kanälen im Inneren des Wärmespeichers bzw. dessen Materials) zu verhindern.

Aufgrund der geforderten Funktion der Fluid-undurchlässigen Schicht muss mit Blick auf die Flexibilität sichergestellt werden, dass die Fluid-undurchlässige Schicht im Betrieb und damit unter Einwirkung von hohem Druck bzw. Temperatur dicht bleibt.

Wie oben angesprochen muss auch sichergestellt werden, dass die Fluid-undurchlässige Schicht im engen Kontakt mit dem zur Speicherung verwendeten Material bleibt.

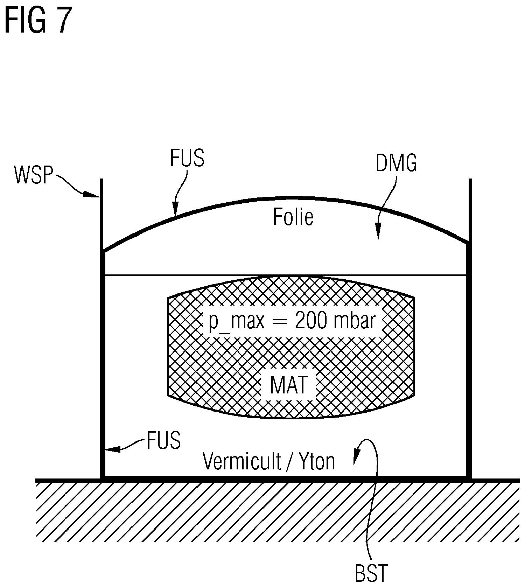

FIG 7 zeigt einen Querschnitt eines Wärmespeicher WSP, der gemäß dem Stand der Technik aufgebaut ist. Der Wärmespeicher WSP beinhaltet ein festes natürliches Material MAT zur Wärmespeicherung. Das Wärmespeicher-Material MAT ist von einer Fluid-undurchlässigen, flexiblen Schicht FUS, einer Folie, derart umfasst, dass das Wärmespeicher-Material MAT mit Blick auf die Umwelt des Wärmespeichers bzw. in Beziehung zur Umgebung des Wärmespeichers zumindest druckdicht isoliert ist.

Das Wärmespeicher-Material MAT ist innerhalb des Wärmespeichers WSP im unteren und im mittleren Bereich von einer formgebenden Basisstruktur BST gestützt, die beispielsweise Vermiculit oder Yton enthalten kann. Mit Hilfe der formgebenden Basisstruktur BST wird die Form und das Volumen des Wärmespeicher-Materials MAT im Wesentlichen definiert und damit die Wärmeaufnahme, die Wärmeabgabe sowie die Temperaturausbreitung im Inneren des Wärmespeichers WSP mit festgelegt.

Das Wärmespeicher-Material MAT ist innerhalb des Wärmespeichers WSP im oberen Bereich umfasst von einer Dämmung DMG, die zwischen dem Wärmespeicher-Material MAT und der Fluid-undurchlässigen, flexiblen Schicht FUS angeordnet ist. Mit Hilfe der Dämmung DMG wird einerseits ein enger Kontakt zwischen der Schicht FUS und dem Wärmespeicher-Material MAT hergestellt, andererseits wird durch die Dämmung DMG eine Beschädigung der Schicht FUS durch das Wärmespeicher-Material MAT vermieden.

Druckschrift WO 2017/055475 A1 offenbart mehrere Deckschichten, darunter auch eine undurchlässige Deckfolie, die wohl Größenänderungen aufgrund Setzvorgänge des Wärmematerials ausgleichen kann.

Druckschrift DE 27 21 173 A1 zeigt außerdem ein Untergrundreservior, bei dem eine Folie vorgesehen ist. Die Folie scheint allerdings fest von innen mit einer vorgesehenen Wärmeisolierschicht verbunden zu sein, ohne dass Ausgleichsbewegungen vorgesehen sind.

Es ist die Aufgabe der vorliegenden Erfindung, einen bezüglich der Fluid-undurchlässigen Schicht optimierten Wärmespeicher anzugeben.

Diese Aufgabe der Erfindung wird durch die Merkmale des Anspruchs 1 gelöst.

Vorteilhafte Weiterbildungen der Erfindung sind in den abhängigen Ansprüchen angegeben.

Es wird eine Anordnung zur Speicherung von thermischer Energie beansprucht. Die Anordnung umfasst einen räumlich ausgestalteten Wärmespeicher, der ein festes natürliches Material zur Wärmespeicherung beinhaltet. Das Wärmespeicher-Material ist von einer Fluid-undurchlässigen, flexiblen Schicht derart umfasst, dass das Wärmespeicher-Material mit Blick auf die Umwelt des Wärmespeichers bzw. in Beziehung zur Umgebung des Wärmespeichers zumindest druckdicht isoliert ist.

Erfindungsgemäß ist eine flexible Deckschicht vorgesehen, die auf die Fluid-undurchlässige, flexible Schicht eine Flächenkraft aufbringt. Die Fluid-undurchlässige, flexible Schicht wird dadurch flächig und bevorzugt formschlüssig auf das Wärmespeicher-Material aufgedrückt.

Die flexible Deckschicht weist erstens die Form eines Netzes auf oder ist zweitens in Form von schuppenartig überlappenden Blechtafeln ausgebildet.

Das feste natürliche Material zur Wärmespeicherung wird auch als Wärmespeicher-Material bezeichnet.

Mit Hilfe der vorliegenden Erfindung wird vorteilhaft erreicht, dass trotz benötigter hoher Dampfparameter (Temperatur T, Leistung P) die Fluid-undurchlässige, flexible Schicht stets optimiert im engen Kontakt mit dem zur Wärmespeicherung verwendeten Material steht.

Auch bei hohen und ggf. schnell erfolgenden Temperaturunterschieden bleibt das Volumen des Wärmespeichermaterials bzw. das Gesamtvolumen des Wärmespeichers erhalten. Dadurch werden ungewollte Effekte im Wärmespeicher (z.B. eine ungleichmäßige Temperaturverteilung im Speichervolumen oder die Bildung von unerwünschten Kanälen im Inneren des Wärmespeichers bzw. dessen Materials) verhindert.

Zur Übertragung von thermischer Energie an das Wärmespeichermaterial und zur Entnahme von thermischer Energie aus dem Wärmespeichermaterial wird ein Fluid (beispielsweise Luft) verwendet. Der Wärmespeicher weist zumindest einen Eingang und zumindest einen Ausgang auf, über die das Fluid zur Energiespeicherung und zur Energieentnahme geleitet wird. Im Vergleich zur Temperatur des Wärmespeichermaterials heißeres, erhitztes Fluid wird zur Energiespeicherung über den Eingang in den Wärmespeicher eingeleitet. Dort wird thermische Energie vom Fluid an das Wärmespeichermaterial übertragen. Das kühlere Fluid wird über den Ausgang aus dem Wärmespeicher geleitet. Entsprechend wird - im Vergleich zur Temperatur des Wärmespeichermaterials - kühleres Fluid zur Energieentnahme über den Eingang in den Wärmespeicher eingeleitet. Dort wird thermische Energie vom Wärmespeichermaterial an das Fluid übertragen und das jetzt heißere Fluid wird über den Ausgang aus dem Wärmespeicher geleitet.

Bei der Energiespeicherung wird das im Vergleich zum Wärmespeicher Energie-reichere Fluid über zumindest eine Eingangsöffnung in den Wärmespeicher eingeleitet und darin derart geführt, dass das Wärmespeicher-Material durch das Fluid erhitzt wird. Mit Hilfe des Wärmespeicher-Materials wird also die über das Fluid zugeführte thermische Energie gespeichert.

Das nach der Speicherung entsprechend Energie-ärmere bzw. kühlere Fluid wird über die zumindest eine Ausgangsöffnung aus dem Wärmespeicher geführt.

Bei der Energieentnahme wird im Vergleich zum Speichermaterial kühleres bzw. energieärmeres Fluid über zumindest eine Eingangsöffnung in den Wärmespeicher eingeleitet und darin derart geführt, dass das Wärmespeicher-Material das Fluid erhitzt. Mit Hilfe des Wärmespeicher-Materials wird also dem Fluid thermische Energie zugeführt. Das nach der Energieentnahme entsprechend Energie-reichere Fluid wird über zumindest eine Ausgangsöffnung aus dem Wärmespeicher geführt.

Nachfolgend wird die vorliegende Erfindung anhand von Figuren näher erläutert. Dabei zeigt:
- FIG 1: einen Querschnitt eines erfindungsgemäßen Wärmespeichers in einer prinzipiellen Darstellung,
- FIG 2: mit Bezug auf FIG 1 eine weitere Ausgestaltung der Erfindung,
- FIG 3: mit Bezug auf FIG 1 eine weitere Ausgestaltung der Erfindung
- FIG 4: mit Bezug auf FIG 3 eine alternative Ausgestaltung der Erfindung,
- FIG 5: mit Bezug auf FIG 1 eine alternative Ausgestaltung der Erfindung,
- FIG 6: mit Bezug auf FIG 3 eine weitere Ausgestaltung der Erfindung, und
- FIG 7: den in der Einleitung beschriebenen Querschnitt eines Wärmespeichers, der gemäß dem Stand der Technik aufgebaut ist.

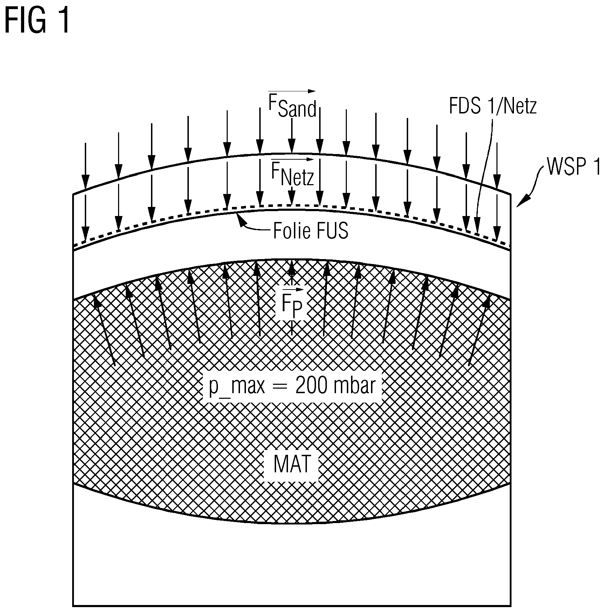

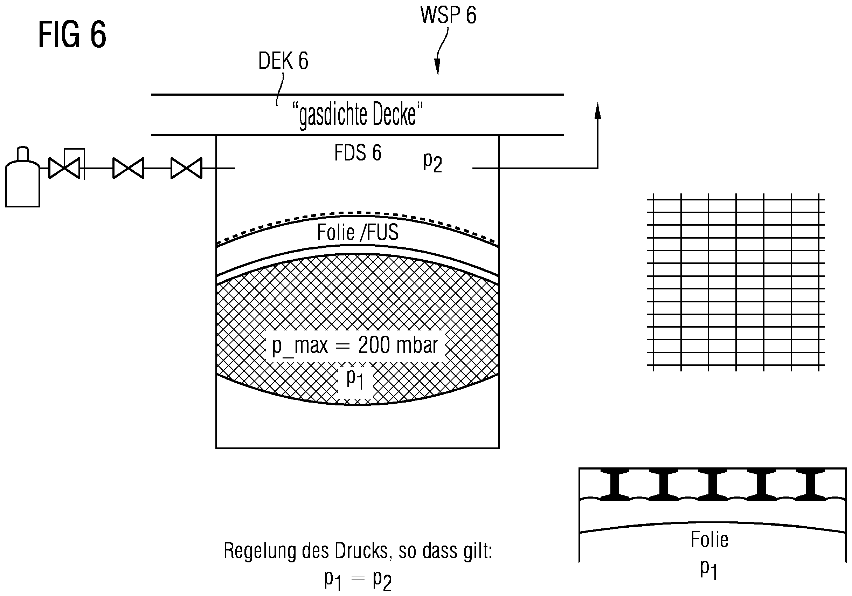

FIG 1 zeigt einen Querschnitt einer erste Ausgestaltung eines erfindungsgemäßen Wärmespeichers WSP1 in einer prinzipiellen Darstellung - die in FIG 6 gezeigte formgebende Basisstruktur BST sowie die Dämmung DMG sind hier und in den nachfolgenden Figuren nicht detailliert dargestellt, können jedoch an den entsprechenden Stellen vorgesehen sein bzw. angeordnet werden.

Der Wärmespeicher WSP1 beinhaltet ein festes natürliches Material MAT zur Wärmespeicherung. Das Wärmespeicher-Material MAT ist von einer Fluid-undurchlässigen, flexiblen Schicht FUS, hier beispielhaft einer Folie, derart umfasst, dass das Wärmespeicher-Material MAT mit Blick auf die Umwelt des Wärmespeichers WSP1 zumindest druckdicht isoliert ist.

Dadurch stellt sich im Betrieb beispielsweise im Inneren des Wärmespeichers WSP1 ein Druck von 200 mbar ein, der über resultierende Kräfte Fₚ flächig gleichmäßig verteilt letztlich auf die Folie FUS wirkt.

Erfindungsgemäß ist eine flexible Deckschicht FDS1 in Form eines Netzes vorgesehen, die auf die Folie FUS eine Flächenkraft F_{Netz} aufbringt. Das Netz ist hier als unterbrochene Linie oberhalb der Folie FUS angedeutet. Die Folie FUS wird mittels des Netzes flächig und bevorzugt formschlüssig auf das Wärmespeichermaterial MAT aufgedrückt.

Zur Erzeugung der Flächenkraft F_{Netz} wird beispielswiese eine Schicht aus Sand auf das Netz aufgebracht, so dass über das Eigengewicht des Sandes eine Flächenkraft F_{Sand} = F_{Netz} gebildet wird.

Alternativ oder ergänzend dazu könnte das Netz auch aus entsprechend schwerem Material (Metall) gefertigt sein, um eine entsprechende Gewichtskraft F_{Gewicht} = F_{Netz} zu bilden. Somit kann das Netz ein metallisches Netz sein, d.h. vorzugsweise aus Metall gefertigt sein.

Unter Netz ist ein vermaschtes System von Fasern, Seilen oder Drähten zu verstehen. Das vermaschte System enthält Verknüpfungspunkte, an denen die Fasern, Seile oder Drähte miteinander verschränkt sind. Ein Netz ist ein flächiges Gebilde, in dem Kräfte gut verteilt werden. Zwischen den Fasern, Seilen oder Drähten, die Maschen bilden, sind Leerräume bzw. Öffnungen. Die Maschen bzw. Öffnungen können beispielsweise rhombisch, quadratisch oder sechseckig ausgebildet sein. Vorzugsweise sind die Fasern, Seile oder Drähte an ihren Verknüpfungspunkten gleitend und/oder knotenlos miteinander verknüpfte. Auf diese Weise können unterschiedliche Kräfte ausgeglichen werden, so dass das Netz trotzdem eine einheitliche gleichförmige Fläche ausbildet, ohne Aus- oder Einstülpungen.

Das Netz ist vorzugsweise derart engmaschig ausgebildet, dass die Folie nicht durch Maschenöffnungen treten kann.

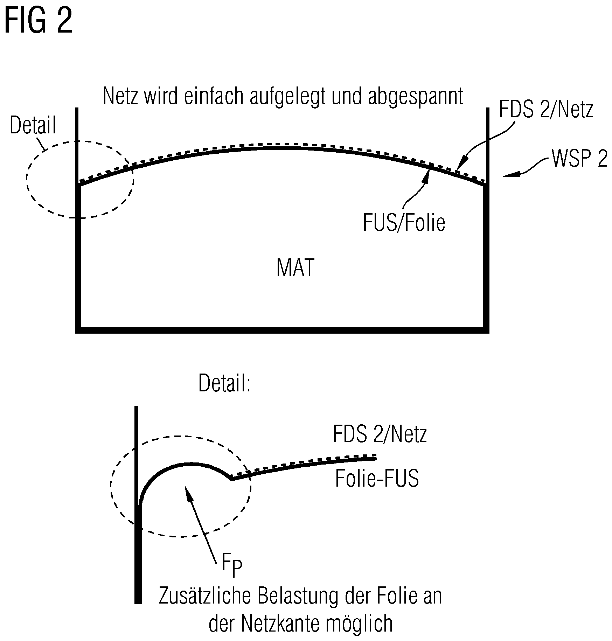

FIG 2 zeigt mit Bezug auf FIG 1 eine weitere Ausgestaltung der Erfindung. Bei dem hier gezeigten Wärmespeicher WSP2 wird ein Netz FDS2 nicht mit Hilfe einer Sandschicht, sondern mit Hilfe einer Abspannung (hier nicht näher dargestellt, z.B. mittels Spanngurten, etc.) auf die Folie FUS gepresst.

Im Detail wird eine bevorzugte Ausgestaltung der Kontaktsituation zwischen der Folie FUS und dem überhöhten Rand des Wärmespeicher WSP2 dargestellt. In diesem Übergangsbereich ist die Folie FUS zusätzlich (z.B. beulenförmig) ausgeformt, um einwirkende Kräfte Fₚ kompensieren zu können. Entsprechend ist die Folie FUS in diesem Bereich frei vom Netz FDS2.

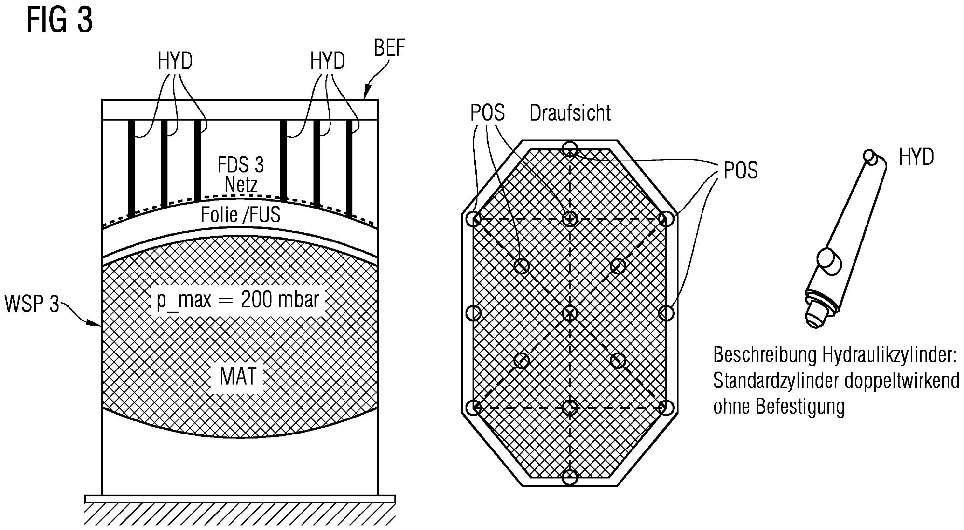

FIG 3 zeigt mit Bezug auf FIG 1 eine weitere Ausgestaltung der Erfindung. Bei dem hier gezeigten Wärmespeicher WSP3 wird ein Netz FDS3 nicht mit Hilfe einer Sandschicht, sondern mit Hilfe von Hydraulikzylindern HYD auf die Folie FUS gepresst.

In der Draufsicht sind jeweilige Positionspunkte POS zu sehen, an denen jeweilige Hydraulikzylindern HYD angeordnet sind, um vertikal ausgerichtete Kräfte auf die Folie FUS mit einem Ende des Hydraulikzylinders HYD auszuüben. Entsprechend sind zu diesem Zweck die Hydraulikzylinder HYD mit ihrem anderen Ende an einer Befestigungseinrichtung (z.B. an einer Decke des Wärmespeicher WSP3) befestigt.

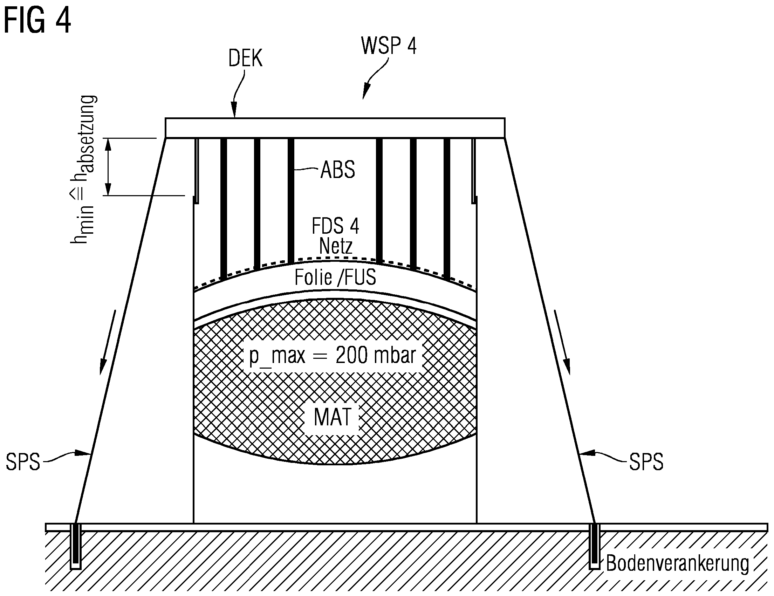

FIG 4 zeigt mit Bezug auf FIG 3 eine alternative Ausgestaltung der Erfindung in einer leichten Abwandlung.

Bei dem hier gezeigten Wärmespeicher WSP4 wird ein Netz FDS4 nicht mit Hilfe von Hydraulikzylindern, sondern mit Hilfe einer beweglichen Decke DEK des Wärmespeicher WSP4 auf die Folie FUS gepresst.

Die Decke gleitet an überhöhten Seitenrändern des Wärmespeicher WSP4 entlang, wobei eine entsprechende Gewichtskraft der Decke DEK über Spannseile SPS erhöht wird.

Über die Spannseile SPS und mit Hilfe von vorgeformten, definierten Abstandshaltern ABS wird die Position der Decke DEK in Bezug auf die Folie FUS sowie die benötigte Flächenkraft definiert.

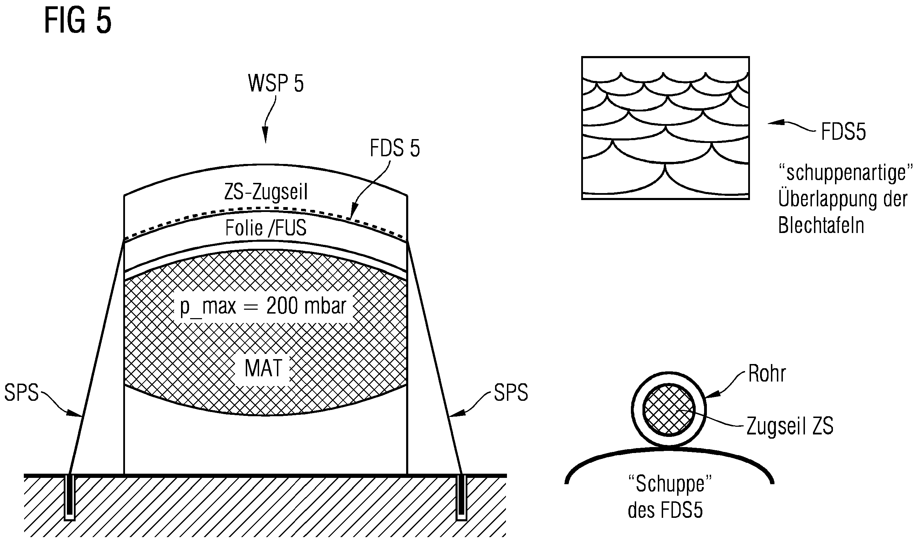

FIG 5 zeigt mit Bezug auf FIG 1 eine alternative Ausgestaltung der Erfindung in einem weiteren Querschnitt.

Der Wärmespeicher WSP5 beinhaltet ein festes natürliches Material MAT zur Wärmespeicherung. Das Wärmespeicher-Material MAT ist von einer Fluid-undurchlässigen, flexiblen Schicht FUS, hier beispielhaft einer Folie, derart umfasst, dass das Wärmespeicher-Material MAT - vorzugsweise mit Blick auf die Umwelt des Wärmespeichers WSP5 bzw. in Beziehung zur Umgebung des Wärmespeichers WSP5 - zumindest druckdicht isoliert ist.

Erfindungsgemäß ist hier eine Schuppenpanzer-förmige, zumindest teil-flexible Deckschicht FDS5 vorgesehen, die schuppenartig überlappende Blechtafeln aufweist - vgl. hierzu das in FIG 5 gezeigte Detail.

Die Folie FUS wird damit flächig und bevorzugt formschlüssig auf das Wärmespeichermaterial MAT aufgedrückt.

Zur Erzeugung der benötigten Flächenkraft werden Zugseile ZS in jeweiligen Rohren über die Schuppen der Deckschicht FDS5 verlegt. Diese Zugseile ZS werden wiederum über Spannseile SPS angespannt, so dass die schuppenartig überlappenden Blechtafeln FDS5 auf die Folie FUS drücken.

FIG 6 zeigt mit Bezug auf FIG 3 eine weitere Ausgestaltung der Erfindung. Bei dem hier gezeigten Wärmespeicher WSP6 wird eine Gas-dichte Netzstruktur FDS6 mit Hilfe von Gasdruck auf die Folie FUS gepresst.

In dieser Ausgestaltung weist der Wärmespeicher WSP6 eine Gas-dichte Decke DEK6 auf.

FIG 7 zeigt weiterhin den in der Einleitung beschriebenen Querschnitt eines Wärmespeichers, der gemäß dem Stand der Technik aufgebaut ist.

## Patentansprüche

1. Anordnung zur Speicherung von thermischer Energie,
- mit einem räumlich ausgestalteten Wärmespeicher, der ein festes natürliches Material zur Wärmespeicherung beinhaltet, nämlich ein Wärmespeicher-Material (MAT),
- bei dem das Wärmespeicher-Material (MAT) von einer Fluid-undurchlässigen, flexiblen Schicht (FUS) derart umfasst ist, dass das Wärmespeicher-Material (MAT) mit Blick auf die Umwelt des Wärmespeichers zumindest druckdicht isoliert ist,
**dadurch gekennzeichnet,**
- **dass** eine flexible Deckschicht vorgesehen ist, die mit der Fluid-undurchlässigen flexiblen Schicht (FUS) derart gekoppelt ist, dass die flexible Deckschicht eine Flächenkraft auf die Fluid-undurchlässige, flexible Schicht (FUS) aufbringt, so dass die Fluid-undurchlässige flexible Schicht (FUS) flächig auf das Wärmespeicher-Material (MAT) drückt, und
- **dass** die flexible Deckschicht (i) die Form eines Netzes aufweist oder (ii) in Form von schuppenartig überlappenden Blechtafeln (FDS5) ausgebildet ist.

2. Anordnung nach Anspruch 1, **dadurch gekennzeichnet, dass** die Fluid-undurchlässige flexible Schicht (FUS) eine Folie ist.

3. Anordnung nach Anspruch 1 oder 2, **dadurch gekennzeichnet, dass**, sofern die flexible Deckschicht die Form eines Netzes aufweist, das Netz als metallisches Netz ausgebildet ist.

4. Anordnung nach Anspruch 3, **dadurch gekennzeichnet, dass** zur Erzeugung der Flächenkraft eine Schicht aus Sand auf das Netz derart aufgebracht ist, um das Netz auf die Folie zu drücken.

5. Anordnung nach Anspruch 1 bis 3, **dadurch gekennzeichnet, dass** zur Erzeugung der Flächenkraft das Netz und/oder die schuppenartig überlappenden Blechtafeln (FDS5) aus schwerem Material, insbesondere aus Metall, gefertigt ist.

6. Anordnung nach Anspruch 1 bis 3, **dadurch gekennzeichnet, dass** zur Erzeugung der Flächenkraft Spanngurte derart vorgesehen sind, dass das Netz und/oder die schuppenartig überlappenden Blechtafeln (FDS5) mit Hilfe der Spanngurten auf die Fluid-undurchlässige flexible Schicht (FUS) gepresst wird.

7. Anordnung nach Anspruch 1 bis 3, **dadurch gekennzeichnet, dass** zur Erzeugung der Flächenkraft Hydraulikzylindern derart vorgesehen sind, dass das Netz mit Hilfe der Hydraulikzylindern auf die Fluid-undurchlässige flexible Schicht (FUS) gepresst wird.

8. Anordnung nach Anspruch 1 bis 3, **dadurch gekennzeichnet, dass** zur Erzeugung der Flächenkraft die Decke des Wärmespeichers derart beweglich ausgestaltet ist, dass die bewegliche Decke auf die Fluid-undurchlässige flexible Schicht (FUS) gepresst wird.

9. Anordnung nach Anspruch 1 oder 2, **dadurch gekennzeichnet, dass**, sofern schuppenartig überlappenden Blechtafeln (FDS5) vorhanden sind, in jeweiligen Rohren verlaufende Zugseile (ZS) über die schuppenartig überlappenden Blechtafeln angeordnet sind.

## Claims

1. Arrangement for storing thermal energy,
- with a heat-storage system which is configured in three dimensions and which comprises a solid natural material for storing heat, namely a heat-storage material (MAT),
- where the heat-storage material (MAT) is surrounded by a flexible fluid-impermeable layer (FUS) in a manner that at least provides pressure-tight isolation of the heat-storage material (MAT) from the environment of the heat-storage system,
**characterized in that**
- a flexible outer layer is provided, coupled to the flexible fluid-impermeable layer (FUS) in a manner such that the flexible outer layer exerts an areal force on the flexible fluid-impermeable layer (FUS) and the flexible fluid-impermeable layer (FUS) therefore exerts areal pressure on the heat-storage material (MAT), and
- the flexible outer layer (i) takes the form of a mesh or (ii) is configured as sheet-metal plates (FDS5) overlapping one another in imbricated manner.

2. Arrangement according to Claim 1, **characterized in that** the flexible fluid-impermeable layer (FUS) is a film.

3. Arrangement according to Claim 1 or 2, **characterized in that**, insofar as the flexible outer layer takes the form of a mesh, the mesh is configured as metallic mesh.

4. Arrangement according to Claim 3, **characterized in that** in order to generate the areal force a layer made of sand has been applied to the mesh in a manner suitable for pressing the mesh onto the film.

5. Arrangement according to any of Claims 1 to 3, **characterized in that** in order to generate the areal force the mesh and/or the sheet-metal plates (FDS5) overlapping one another in imbricated manner has/have been manufactured from heavy material, in particular from metal.

6. Arrangement according to any of Claims 1 to 3, **characterized in that** in order to generate the areal force tension straps have been provided in a manner such that the mesh and/or the sheet-metal plates (FDS5) overlapping one another in imbricated manner is/are pressed onto the flexible fluid-impermeable layer (FUS) with the aid of the tension straps.

7. Arrangement according to any of Claims 1 to 3, **characterized in that** in order to generate the areal force hydraulic cylinders have been provided in a manner such that the mesh is pressed onto the flexible fluid-impermeable layer (FUS) with the aid of the hydraulic cylinders.

8. Arrangement according to any of Claims 1 to 3, **characterized in that** in order to generate the areal force the top cover of the heat-storage system is configured movably in a manner such that the movable top cover is pressed onto the flexible fluid-impermeable layer (FUS).

9. Arrangement according to Claim 1 or 2, **characterized in that**, insofar as sheet-metal plates (FDS5) overlapping one another in imbricated manner are present, traction cables (ZS) are arranged in respective tubes above the sheet-metal plates overlapping one another in imbricated manner.

## Revendications

1. Dispositif de stockage d'énergie thermique,
- comprenant un accumulateur de chaleur de conception spatiale, qui contient un matériau naturel solide pour accumuler de la chaleur, à savoir un matériau accumulateur de chaleur (MAT),
- dans lequel le matériau accumulateur de chaleur (MAT) est entouré d'une couche souple imperméable aux fluides (FUS) de manière telle que le matériau accumulateur de chaleur (MAT) est isolé au moins de façon étanche à la pression par rapport à l'environnement de l'accumulateur de chaleur,
**caractérisé en ce que**
- une couche de recouvrement souple est prévue, qui est accouplée à la couche souple imperméable aux fluides (FUS) de manière telle que la couche de recouvrement souple applique une force superficielle sur la couche souple imperméable aux fluides (FUS) de façon à ce que la couche souple imperméable aux fluides (FUS) comprime à plat le matériau accumulateur de chaleur (MAT), et
- la couche de recouvrement souple (i) a la forme d'un filet ou (ii) est conçue sous forme de feuilles de tôle se recouvrant comme des écailles (FDS5).

2. Dispositif selon la revendication 1, **caractérisé en ce que** la couche souple imperméable aux fluides (FUS) est une feuille.

3. Dispositif selon la revendication 1 ou 2, **caractérisé en ce que**, dans la mesure où la couche de recouvrement souple a la forme d'un filet, le filet est conçu sous forme de filet métallique.

4. Dispositif selon la revendication 3, **caractérisé en ce que**, pour générer la force superficielle, une couche de sable est appliquée sur le filet de manière à presser le filet contre la feuille.

5. Dispositif selon l'une des revendications 1 à 3, **caractérisé en ce que**, pour générer la force superficielle, le filet et/ou les feuilles de tôle se recouvrant comme des écailles (FDS5) sont fabriquées en un matériau lourd, notamment en métal.

6. Dispositif selon l'une des revendications 1 à 3, **caractérisé en ce que**, pour générer la force superficielle, des sangles de serrage sont prévues de manière telle que le filet et/ou les feuilles de tôle se recouvrant comme des écailles (FDS5) sont pressées à l'aide des sangles de serrage contre la couche souple imperméable aux fluides (FUS).

7. Dispositif selon l'une des revendications 1 à 3, **caractérisé en ce que**, pour générer la force superficielle, des vérins hydrauliques sont prévus de manière telle que le filet est comprimé à l'aide des vérins hydrauliques contre la couche souple imperméable aux fluides (FUS).

8. Dispositif selon l'une des revendications 1 à 3, **caractérisé en ce que**, pour générer la force superficielle, le plafond de l'accumulateur de chaleur est conçu de façon mobile de manière telle que le plafond mobile est pressé contre la couche souple imperméable aux fluides (FUS).

9. Dispositif selon la revendication 1 ou 2, **caractérisé en ce que**, dans la mesure où des feuilles de tôle se recouvrant comme des écailles (FDS5) sont présentes, des câbles de traction (ZS) s'étendant dans des tuyaux respectifs sont disposés sur les feuilles de tôle se recouvrant comme des écailles.
